# EUROPEAN PATENT SPECIFICATION

(11) **EP 3 800 219 B1**
(45) Date of publication and mention of the grant of the patent: **30.11.2022**
(21) Application number: 19934335.1
(22) Date of filing: 12.07.2019
(51) Int. Cl.: C08L 3/02, C08L 67/04, C08K 5/053, A24F 47/00

(54) **STARCH-BASED COOLING MATERIAL AND APPLICATIONS THEREOF**
AUF STÄRKE BASIERENDES KÜHLMATERIAL UND ANWENDUNGEN DAVON
MATÉRIAU DE REFROIDISSEMENT À BASE D'AMIDON ET SES APPLICATIONS

(30) Priority: 27.06.2019 CN 201910569047
(43) Date of publication of application: 07.04.2021
(73) Proprietor: China Tobacco Guangdong Industrial Co., Ltd., Guangzhou, Guangdong 510500 (CN)
(72) Inventor: HU, Jing, Guangzhou, Guangdong 510500 (CN); LIU, Yibo, Guangzhou, Guangdong 510500 (CN); LI, Feng, Guangzhou, Guangdong 510500 (CN); ZENG, Jian, Guangzhou, Guangdong 510500 (CN); ZHAO, Ruifeng, Guangzhou, Guangdong 510500 (CN); CHEN, Hezhou, Guangzhou, Guangdong 510500 (CN); CHEN, Donge, Guangzhou, Guangdong 510500 (CN); LIU, Xi, Guangzhou, Guangdong 510500 (CN)
(74) Representative: Inchingalo, Simona
(86) International application number: PCT/CN2019/095703
(87) International publication number: WO 2020/258388

(56) References cited:
- EP-A1- 3 064 542
- WO-A1-2013/164624
- CN-A- 104 366 687
- CN-A- 107 212 471
- CN-A- 108 065 456
- CN-A- 108 451 054
- CN-A- 109 393 558
- CN-A- 109 419 043
- CN-A- 109 588 775
- US-A1- 2015 101 606

## Description

### TECHNICAL FIELD

The present invention relates to the technical field of cooling material for heat-not-burn cigarettes, and more particularly, to a starch-based cooling material and an application thereof.

### BACKGROUND

A temperature for heating a heat-not-burn cigarette is usually lower than 500°C, so that a variety of harmful ingredients in smoke can be greatly reduced, while aroma constituents are relatively less affected, and some aroma constituents may even increase due to the reduction of pyrolysis. Nicotine and most aroma constituents may be released from tobacco at a relatively low temperature (250°C to 500°C) and transferred into the smoke. Since a tobacco matrix is separated from a heating part in the heat-not-burn cigarette, electrical heating is a mainstream heating method currently. Although the electrical heating avoids a risk of igniting the tobacco, there is still a problem of a high smoke temperature during smoking. Especially, a length of the heat-not-burn cigarette is generally short at present, a cooling time and distance of the smoke are limited, the temperature of the smoke is high, and a hot and irritating feeling is strong. Therefore, how to develop a cooling material for the heat-not-burn cigarette with strong cooling effect is also a key research aspect of the heat-not-burn cigarette.

At present, a polylactic acid (PLA) film is used as a smoke cooling material in some cigarettes. Although the polylactic acid film has a cooling effect, the polylactic acid film is easy to shrink when heated. There are also many other phase change materials applied in the field of cooling the heat-not-burn cigarettes. When the phase change materials are added into a cigarette filter stick, the smoke temperature of the cigarette smoked can be effectively reduced, but these materials have a defect of intercepting the smoke, thus reducing the smoking experience. CN109393558A in the prior art discloses a PLA cooling filter stick and a preparation method thereof. The cooling filter stick achieves a cooling effect through a filtering section consisting of a straight-through groove and a PLA tow for cigarette, but the cooling effect of the design is mainly that the straight-through groove improves an efficiency of radiating heat to the outside so as to achieve the cooling effect, and it does not make any corresponding improvement on the strong cooling effect of the cooling material itself.

### SUMMARY

A technical problem to be solved by the present invention is to overcome the defects and deficiencies that the existing cooling material of the heat-not-burn cigarette cannot achieve strong cooling and low filtration, and provide a starch-based cooling material and an application thereof.

The above objectives of the present invention are achieved by the following technical solutions.

A starch-based cooling material, wherein the starch-based cooling material is prepared by 5.0 to 15.0 parts of a starch, 0.2 to 5.0 parts of a phase change material, and 0.3 to 3.0 parts of a polyol. The phase change material is polylactic acid, the polyol is glycerol.

The raw materials for preparing the starch-based cooling material according to the present invention are fully degradable biological materials, and have high environmental protection values. Under the condition of swelling by water, the starch has the characteristic of self-adhesion, the phase change material has the effects of absorbing and storing heat, reducing an air flow temperature, and meanwhile, makes the starch-based cooling material to have better adhesion and easy to be molded by screw extrusion. The addition of the polyol softens the starch-based cooling material and improves fluidity. Through a twin-screw extrusion and stretching process, the starch-based cooling material is easy to be molded, which is conducive to improving structure stability and a cooling effect.

In particular, the starch-based cooling material of the present invention can be prepared into a corresponding starch-based multi-channel airflow unit by an extrusion stretching process, and a specific method is as follows:
I) melting and mixing materials:
   1) heating and melting a polylactic acid, controlling temperature in four temperature zones: from zone 1 to zone 2, rapidly heating up to be melted, so as to reduce damages to a molecular structure in the process; from zone 2 to zone 3, slightly heating up to be fully melted without decomposition; and from zone 3 to zone 4, the melt has a stable state;
   2) adding starch: adding the starch in the temperature control zone 3, and fully mixing; and
   3) adding polyol: adding the polyol in the temperature control zone 4;
II) extruding: twin-screw extrusion;
III) sizing in vacuum;
IV) cooling and sizing;
V) pulling; and
VI) cutting: length control.

Preferably, the starch-based cooling material is prepared by 8.0 to 9.0 parts of the starch, 0.5 to 1.0 part of the phase change material, and 0.5 to 1.0 part of the polyol.

For example, the starch-based cooling material may be prepared by 8.0 parts of the starch, 0.8 part of the phase change material, and 0.8 part of the polyol; or
9.0 parts of the starch, 0.8 part of the phase change material, and 0.8 part of the polyol; or
9.0 parts of the starch, 0.6 part of the phase change material, and 0.6 part of the polyol; or
8.0 parts of the starch, 0.6 part of the phase change material, and 0.6 part of the polyol.

More preferably, the starch-based cooling material is prepared by 8.0 parts of the starch, 0.8 to 0.6 part of the phase change material, and 0.6 to 0.8 part of the polyol.

Preferably, a grain size of the starch is 10 µm to 200 µm.

Preferably, the grain size of the starch is 10 µm to 100 µm.

The starch of the present invention may be one or more of corn starch, potato starch, purple potato starch and lily starch.

The phase change material is polylactic acid, and the molecular weight of the polylactic acid is 10,000 to 200,000.

More preferably, the molecular weight of the polylactic acid is 15,000 to 100,000.

In order to achieve better material molding and improve the cooling effect, more preferably, the grain size of the starch is 20 µm to 80 µm, and the molecular weight of the polylactic acid is 20,000 to 80,000.

For example, it may be that the grain size of the starch is 20 µm, and the molecular weight of the polylactic acid is 50,000; or
the grain size of the starch is 80 µm, and the molecular weight of the polylactic acid is 30,000; or
the grain size of the starch is 30 µm, and the molecular weight of the polylactic acid is 30,000; or
the grain size of the starch is 30 µm, and the molecular weight of the polylactic acid is 50,000.

Further preferably, the grain size of the starch is 30 µm, and the molecular weight of the polylactic acid is 50,000.

The polyol is glycerol.

An application of the starch-based cooling material in preparing a heat-and-burn cigarette filter stick is also within the scope of protection of the present invention.

A specific application mode may be as follows: a 23 mm starch-based pipe and a 7 mm acetate fiber serve as one basic unit combination, and one basic unit is applied to a heat-and-burn cigarette as a smoke filtering section, in which the acetate fiber section is located at a downstream end (lip end) of smoke, the starch-based pipe is located at an upstream end of the smoke. A temperature difference between the two ends of the starch-based pipe is between 70°C and 120°C, indicating that the starch-based pipe unit has a strong cooling effect.

The starch-based cooling material according to the present invention not only has the strong cooling effect of rapid cooling, but also can reduce the smoke temperature to a level of 70°C to 120°C, and all the raw materials for preparing the whole matrix are biodegradable, which are green and environment-friendly. Applying the starch-based cooling material to the heat-and-burn cigarette filter stick can significantly alleviate the problems of excessively high smoke temperature and strong hot and irritating feeling of the heat-and-burn cigarette, and further improve a smoking sensory comfort and retaining aroma substances of heat-and-burn cigarette products.

The present invention further protects a heat-and-burn cigarette filter stick, and the filter stick includes a starch-based multi-channel unit prepared by the starch-based cooling material mentioned above.

Compared with the prior art, the present invention has the following beneficial effects.
(1) The starch-based cooling material of the present invention is prepared by coordination of the starch, the phase change material and the polyol, wherein the phase change material has effects of absorbing and storing heat, the temperature of the smoke can be significantly reduced, an effect of fast and strong cooling is realized, and the cooling effect can reach 70°C to 120°C. The starch-based cooling material is convenient for processing and molding, and effectively reduces interception of aroma constituents in the cigarette smoke.
(2) All the raw materials for preparing the starch-based cooling material according to the present invention are degradable biological materials, and the prepared heat-and-burn cigarette filter stick can be degraded after use, which is green and environment-friendly, and can be widely applied to the field of preparing the heat-and-burn cigarette products.

### DETAILED DESCRIPTION

The present invention will be further described below with reference to the specific embodiments. Unless otherwise indicated, the raw material reagents employed in the present invention are conventionally purchased raw material reagents.

### Embodiment 1

A starch-based cooling material, wherein the starch-based cooling material was prepared by 5.0 parts of a starch, 0.2 part of a phase change material, and 0.3 part of a polyol. The starch was corn starch, the phase change material was polylactic acid, and the polyol was glycerol.

A specific preparation process was as follows:
I) melting and mixing materials:
   1) heating and melting the polylactic acid, controlling temperature in four temperature zones: from zone 1 to zone 2, the polylactic acid was rapidly heated up to be melted, so as to reduce damages to a molecular structure in the process; from zone 2 to zone 3, the polylactic acid was slightly heated to be fully melted without decomposition; and from zone 3 to zone 4, the melt had a stable state;
   2) adding the starch: the starch was added in the temperature control zone 3, and fully mixed; and
   3) adding the polyol: the polyol was added in the temperature control zone 4;
II) extruding: twin-screw extrusion;
III) sizing in vacuum;
IV) cooling and sizing;
V) pulling; and
VI) cutting: length control.

### Embodiment 2

A starch-based cooling material, wherein the starch-based cooling material was prepared by 15.0 parts of a starch, 5.0 parts of a phase change material, and 3.0 parts of a polyol. The starch was potato starch, the phase change material was polylactic acid, and the polyol was glycerol.

A specific preparation process was as follows:
I) melting and mixing materials:
   1) heating and melting the polylactic acid, controlling temperature in four temperature zones: from zone 1 to zone 2, the polylactic acid was rapidly heated up to be melted, so as to reduce damages to a molecular structure in the process; the polylactic acid was slightly heated up zone 2 to zone 3 to be fully melted without decomposition; and from zone 3 to zone 4, the melt had a stable state;
   2) adding the starch: the starch was added in the temperature control zone 3, and fully mixed; and
   3) adding the polyol: the polyol was added in the temperature control zone 4;
II) extruding: twin-screw extrusion;
III) sizing in vacuum;
IV) cooling and sizing;
V) pulling; and
VI) cutting: length control.

### Embodiment 3

A starch-based cooling material, wherein the starch-based cooling material was prepared by 7.0 parts of a starch, 3.0 parts of a phase change material, and 2.0 parts of a polyol. The starch was potato starch, the phase change material was polylactic acid, and the polyol was glycerol.

A specific preparation process was as follows:
I) melting and mixing materials:
   1) heating and melting the polylactic acid, controlling temperature in four temperature zones: from zone 1 to zone 2, the polylactic acid was rapidly heated up to be melted, so as to reduce damages to a molecular structure in the process; from zone 2 to zone 3, the polylactic acid was slightly heated up to be fully melted without decomposition; and from zone 3 to zone 4, the melt had a stable state;
   2) adding the starch: the starch was added in the temperature control zone 3, and fully mixing; and
   3) adding the polyol: the polyol was added in the temperature control zone 4;
II) extruding: twin-screw extrusion;
III) sizing in vacuum;
IV) cooling and sizing;
V) pulling; and
VI) cutting: length control.

### Embodiment 4

A starch-based cooling material, wherein the starch-based cooling material was prepared by 8.0 parts of a starch, 1.0 part of a phase change material, and 1.0 part of a polyol. The starch was potato starch, the phase change material was polylactic acid, the polyol was glycerol, a grain size of the starch was 10 µm, and a molecular weight of the polylactic acid was 15,000.

### Embodiment 5

A starch-based cooling material, wherein the starch-based cooling material was prepared by 8.0 parts of a starch, 1.0 part of a phase change material, and 0.8 part of a polyol. The starch was potato starch, the phase change material was polylactic acid, the polyol was glycerol, a grain size of the starch was 100 µm, and a molecular weight of the polylactic acid was 200,000.

### Embodiment 6

A starch-based cooling material, wherein the starch-based cooling material was prepared by 8.0 parts of a starch, 0.8 part of a phase change material, and 0.8 part of a polyol. The starch was potato starch, the phase change material was polylactic acid, the polyol was glycerol, a grain size of the starch was 20 µm, and a molecular weight of the polylactic acid was 50,000.

### Embodiment 7

A starch-based cooling material, wherein the starch-based cooling material was prepared by 9.0 parts of a starch, 0.8 part of a phase change material, and 0.8 part of a polyol. The starch was potato starch, the phase change material was polylactic acid, the polyol was glycerol, a grain size of the starch was 80 µm, and a molecular weight of the polylactic acid was 30,000.

### Embodiment 8

A starch-based cooling material, wherein the starch-based cooling material was prepared by 9.0 parts of a starch, 0.6 part of a phase change material, and 0.6 part of a polyol. The starch was potato starch, the phase change material was polylactic acid, the polyol was glycerol, a grain size of the starch was 30 µm, and a molecular weight of the polylactic acid was 30,000.

### Embodiment 9

A starch-based cooling material, wherein the starch-based cooling material was prepared by 8.0 parts of a starch, 0.8 part of a phase change material, and 0.8 part of a polyol. The starch was potato starch, the phase change material was polylactic acid, the polyol was glycerol, a grain size of the starch was 30 µm, and a molecular weight of the polylactic acid was 50,000.

### Embodiment 10

A starch-based cooling material, wherein the starch-based cooling material was prepared by 8.0 parts of a starch, 0.6 part of a phase change material, and 0.6 part of a polyol. The starch was potato starch, the phase change material was polylactic acid, the polyol was glycerol, a grain size of the starch was 30 µm, and a molecular weight of the polylactic acid was 50,000.

### Comparative Example 1

A starch-based cooling material, wherein the starch-based cooling material was prepared by 20 parts of a starch, 6 parts of a phase change material, and 5 parts of a polyol. The starch was potato starch, the phase change material was polylactic acid, the polyol was glycerol, a grain size of the starch was 30 µm, and a molecular weight of the polylactic acid was 50,000.

### Comparative Example 2

A starch-based cooling material, wherein the starch-based cooling material was prepared by 4 parts of a starch, 0.1 part of a phase change material, and 0.2 part of a polyol. The starch was potato starch, the phase change material was polylactic acid, the polyol was glycerol, a grain size of the starch was 30 µm, and a molecular weight of the polylactic acid was 50,000.

### Comparative Example 3

A starch-based cooling material, wherein the starch-based cooling material was prepared by 8.0 parts of a starch, 0.5 part of a phase change material, and 4.0 parts of a polyol. The starch was potato starch, the phase change material was polylactic acid, the polyol was glycerol, a grain size of the starch was 30 µm, and a molecular weight of the polylactic acid was 50,000.

### Comparative Example 4

A starch-based cooling material, wherein the starch-based cooling material was prepared by 8.0 parts of a starch, 0.5 part of a phase change material, and 0.1 part of a polyol. The starch was potato starch, the phase change material was polylactic acid, the polyol was glycerol, a grain size of the starch was 30 µm, and a molecular weight of the polylactic acid was 50,000.

### Comparative Example 5

A phase change cooling material, wherein the phase change material was polylactic acid, and a molecular weight of the polylactic acid was 50,000.

### Result detection

### (1) Cooling effect detection

The starch-based cooling materials prepared in Embodiments 1 to 10 and Comparative Examples 1 to 4 were prepared into the corresponding heat-and-burn cigarette filter sticks. The filter stick included a cooling material section and an acetate fiber section. The corresponding filter sticks were applied to the heat-and-burn cigarettes, temperatures at both ends of the cooling materials were detected, and related temperature differences were recorded, which were the cooling effects. A length of the cooling material section was 23 mm, and a length of the acetate fiber section was 7 mm. A smoke amount was tested by a weight reduction method with reference to ISO standard smoking method, i.e. 35 ml/2 s/30 s. After smoking seven cigarettes, a mass difference before and after smoking was calculated, and a mean value of three cigarettes was taken to obtain the value of the smoke amount, and the test results of each embodiment were divided by the results of Comparative Example 5 to get the relative value of the smoke amount.

The test results were as shown in Table 1.

**Table 1**

| Serial number | Cooling effect/°C | Smoke amount ratio |
|---|---|---|
| Embodiment 1 | 70 | 1.20 |
| Embodiment 2 | 75 | 1.23 |
| Embodiment 3 | 95 | 1.25 |
| Embodiment 4 | 90 | 1.28 |
| Embodiment 5 | 88 | 1.30 |
| Embodiment 6 | 120 | 1.35 |
| Embodiment 7 | 115 | 1.30 |
| Embodiment 8 | 110 | 1.34 |
| Embodiment 9 | 114 | 1.36 |
| Embodiment 10 | 118 | 1.29 |
| Comparative Example 1 | 65 | 1.30 |
| Comparative Example 2 | 60 | 1.27 |
| Comparative Example 3 | 50 | 1.30 |
| Comparative Example 4 | 55 | 1.35 |
| Comparative Example 5 | 68 | 1.00 |

It can be seen from the data in Table 1 above that the cooling effect of the starch-based cooling material according to the present invention is all above 70°C, and the starch-based cooling material has a good cooling effect. It can be seen from the Comparative Examples that the single polylactic acid material can only achieve a cooling effect of about 68°C, which cannot achieve the strong cooling effect of the present invention, and other specific solutions which are not within the scope of protection of each constituent of the present invention cannot achieve the cooling value of the present invention. It follows that the technical solutions of the present invention have obvious beneficial effects.

### (2) Sensory evaluation of smoking

The test results were as shown in Table 2.

**Table 2**

| Serial number | Sensory evaluation of smoking |
|---|---|
| Embodiment 1 | 8.5 |
| Embodiment 2 | 8.0 |
| Embodiment 3 | 8.5 |
| Embodiment 4 | 8.5 |
| Embodiment 5 | 8.0 |
| Embodiment 6 | 9.5 |
| Embodiment 7 | 9.0 |
| Embodiment 8 | 9.0 |
| Embodiment 9 | 9.0 |
| Embodiment 10 | 9.5 |
| Comparative Example 1 | 7.0 |
| Comparative Example 2 | 7.5 |
| Comparative Example 3 | 7.5 |
| Comparative Example 4 | 7.0 |
| Comparative Example 5 | 7.5 |

It can be seen from the data in Table 2 above that the sensory evaluation of smoking of the starch-based cooling material according to the present invention is all above 8.0, which can effectively reduce the interception of aroma constituents in the cigarette smoke, ensure the content of the aroma substances in the smoke during smoking, and improve the smoking sensory quality. It can be seen from the Comparative Examples that the smoking score of the single polylactic acid material is only 7.5, which cannot achieve the effect of the present invention, and other specific solutions which are not within the scope of protection of each constituent of the present invention cannot achieve the score of the sensory evaluation of smoking of the present invention. It also follows that the technical solutions of the present invention have obvious beneficial effects.

Obviously, the above-mentioned embodiments of the present invention are merely examples for clearly illustrating the present invention, but are not intended to limit the implementations of the present invention. For those of ordinary skills in the art, other different forms of changes or variations can be made on the basis of the above description. It is not necessary or possible to exhaust all the implementations here. Any modifications, equivalent substitutions, and improvements made within the spirit and principle of the present invention shall all fall within the scope of protection claimed by the present invention.

## Claims

1. A starch-based cooling material, **characterized in that**, the starch-based cooling material is exclusively prepared by 5.0 to 15.0 parts of a starch, 0.2 to 5.0 parts of polylactic acid, and 0.3 to 3.0 parts of glycerol, wherein the starch-based cooling material is prepared by
I) melting and mixing materials:
1) heating and melting a polylactic acid, controlling temperature in four temperature zones: from zone 1 to zone 2, rapidly heating up to be melted, so as to reduce damages to a molecular structure in the process; from zone 2 to zone 3, slightly heating up to be fully melted without decomposition; and from zone 3 to zone 4, the melt has a stable state;
2) adding starch: adding the starch in the temperature control zone 3, and fully mixing; and
3) adding glycerol: adding the glycerol in the temperature control zone 4;
II) extruding: twin-screw extrusion;
III) sizing in vacuum;
IV) cooling and sizing;
V) pulling; and
VI) cutting: length control.

2. The starch-based cooling material according to claim 1, **characterized in that** the starch-based cooling material is prepared by 8.0 to 9.0 parts of the starch, 0.5 to 1.0 part of the polylactic acid, and 0.5 to 1.0 part of the glycerol.

3. The starch-based cooling material according to claim 1, **characterized in that** a grain size of the starch is 10 µm to 200 µm.

4. The starch-based cooling material according to claim 3, **characterized in that** the grain size of the starch is 10 µm to 100 µm.

5. The starch-based cooling material according to claim 3, **characterized in that** a molecular weight of the polylactic acid is 10,000 to 200,000.

6. The starch-based cooling material according to claim 5, **characterized in that** the molecular weight of the polylactic acid is 15,000 to 100,000.

7. The starch-based cooling material according to claim 5, **characterized in that** the grain size of the starch is 20 µm to 80 µm, and the molecular weight of the polylactic acid is 20,000 to 80,000.

8. An application of the starch-based cooling material according to any one of claims 1 to 7 in preparing a heat-not-burn cigarette filter stick.

9. A heat-not-burn cigarette filter stick, **characterized in that** the filter stick comprises a starch-based multi-channel unit prepared by the starch-based cooling material according to any one of claims 1 to 7.

## Patentansprüche

1. Auf Stärke basierendes Kühlmaterial, **dadurch gekennzeichnet, dass** das auf Stärke basierende Kühlmaterial ausschließlich durch 5,0 bis 15,0 Teile Stärke, 0,2 bis 5,0 Teile Polymilchsäure und 0,3 bis 3,0 Teile Glycerin vorbereitet wird, wobei das auf Stärke basierende Kühlmaterial vorbereitet wird durch
I) Schmelzen und Vermischen von Materialien:
1) Erwärmen und Schmelzen einer Polymilchsäure, Temperaturkontrolle in vier Temperaturzonen: von Zone 1 bis Zone 2 schnelles Erwärmen bis zum Schmelzen, sodass Schäden an einer molekularen Struktur im Prozess reduziert werden; von Zone 2 bis Zone 3 leichtes Erwärmen bis zum völligen Schmelzen ohne Zersetzung; und von Zone 3 bis Zone 4 weist die Schmelze einen stabilen Zustand auf;
2) Hinzufügen von Stärke: Hinzufügen der Stärke in der Temperaturkontrollzone 3 und vollständiges Vermischen, und
3) Hinzufügen von Glycerin: Hinzufügen des Glycerins in der Temperaturkontrollzone 4;
II) Extrudieren: Doppelschneckenextrusion;
III) Dimensionieren unter Vakuum;
IV) Kühlen und Dimensionieren;
V) Ziehen und
VI) Schneiden: Längenkontrolle.

2. Auf Stärke basierendes Kühlmaterial nach Anspruch 1, **dadurch gekennzeichnet, dass** das auf Stärke basierende Kühlmaterial durch 8,0 bis 9,0 Teile Stärke, 0,5 bis 1,0 Teile Polymilchsäure und 0,5 bis 1,0 Teile Glycerin vorbereitet wird.

3. Auf Stärke basierendes Kühlmaterial nach Anspruch 1, **dadurch gekennzeichnet, dass** eine Korngröße der Stärke 10 µm bis 200 µm beträgt.

4. Auf Stärke basierendes Kühlmaterial nach Anspruch 3, **dadurch gekennzeichnet, dass** die Korngröße der Stärke 10 µm bis 100 µm beträgt.

5. Auf Stärke basierendes Kühlmaterial nach Anspruch 3, **dadurch gekennzeichnet, dass** ein Molekulargewicht der Polymilchsäure 10.000 bis 200.000 beträgt.

6. Auf Stärke basierendes Kühlmaterial nach Anspruch 5, **dadurch gekennzeichnet, dass** das Molekulargewicht der Polymilchsäure 15.000 bis 100.000 beträgt.

7. Auf Stärke basierendes Kühlmaterial nach Anspruch 5, **dadurch gekennzeichnet, dass** die Korngröße der Stärke 20 µm bis 80 µm beträgt und das Molekulargewicht der Polymilchsäure 20.000 bis 80.000 beträgt.

8. Anwendung eines auf Stärke basierenden Kühlmaterials nach einem der Ansprüche 1 bis 7 bei der Vorbereitung eines Heat-not-Burn-Zigarettenfiltersticks.

9. Heat-not-Burn-Zigarettenfilterstick, **dadurch gekennzeichnet, dass** der Filterstick eine auf Stärke basierende Mehrkanaleinheit umfasst, vorbereitet durch das auf Stärke basierende Kühlmaterial nach einem der Ansprüche 1 bis 7.

## Revendications

1. Matériau de refroidissement à base d'amidon, **caractérisé en ce que** le matériau de refroidissement à base d'amidon est exclusivement préparé par 5,0 à 15,0 parties d'un amidon, 0,2 à 5,0 parties d'acide polylactique, et 0,3 à 3,0 parties de glycérol, dans lequel le matériau de refroidissement à base d'amidon est préparé par
I) fusion et mélange des matériaux :
1) en chauffant et en faisant fondre un acide polylactique, en contrôlant la température dans quatre zones de température : de la zone 1 à la zone 2, en chauffant rapidement pour être fondu, de façon à réduire les dommages à une structure moléculaire dans le processus ; de la zone 2 à la zone 3, en chauffant légèrement pour être complètement fondu sans décomposition ; et de la zone 3 à la zone 4, la fusion a un état stable ;
2) ajouter de l'amidon : ajout de l'amidon dans la zone 3 de contrôle de température, et mélange complet ; et
3) ajouter du glycérol : ajout de glycérol dans la zone 4 de contrôle de température ;
II) extrusion : extrusion à double vis ;
III) calibrage sous vide ;
IV) refroidissement et calibrage ;
V) tirage ; et
VI) coupe : contrôle de la longueur.

2. Matériau de refroidissement à base d'amidon selon la revendication 1, **caractérisé en ce que** le matériau de refroidissement à base d'amidon est préparé par 8,0 à 9,0 parties de l'amidon, 0,5 à 1,0 partie de l'acide polylactique, et 0,5 à 1,0 partie du glycérol.

3. Matériau de refroidissement à base d'amidon selon la revendication 1, **caractérisé en ce qu'**une grosseur du grain de l'amidon est comprise entre 10 et 200 µm.

4. Matériau de refroidissement à base d'amidon selon la revendication 3, **caractérisé en ce que** la grosseur du grain de l'amidon est comprise entre 10 et 100 µm.

5. Matériau de refroidissement à base d'amidon selon la revendication 3, **caractérisé en ce qu'**un poids moléculaire de l'acide polylactique est compris entre 10 000 et 200 000.

6. Matériau de refroidissement à base d'amidon selon la revendication 5, **caractérisé en ce que** le poids moléculaire de l'acide polylactique est compris entre 15 000 et 100 000.

7. Matériau de refroidissement à base d'amidon selon la revendication 5, **caractérisé en ce que** la grosseur du grain de l'amidon est comprise entre 20 et 80 µm, et la masse moléculaire de l'acide polylactique est comprise entre 20 000 et 80 000.

8. Application du matériau de refroidissement à base d'amidon selon l'une quelconque des revendications 1 à 7 dans la préparation d'un bâtonnet-filtre de cigarette « heat-not-burn ».

9. Bâtonnet-filtre de cigarette « heat-not-burn », **caractérisé en ce que** le bâtonnet-filtre comprend une unité multicanaux à base d'amidon préparée par le matériau de refroidissement à base d'amidon selon l'une quelconque des revendications 1 à 7.
